Europäisches Patentamt

European Patent Office

Office européen des brevets

(19)

(11) Veröffentlichungsnummer: **0 503 264 A1**

# (12) EUROPÄISCHE PATENTANMELDUNG

(21) Anmeldenummer: **92101769.5**

(22) Anmeldetag: **04.02.92**

(51) Int. Cl.5: **H01M 2/12**, H01M 2/04

(30) Priorität: **09.03.91 DE 4107616**

(43) Veröffentlichungstag der Anmeldung:
**16.09.92 Patentblatt 92/38**

(84) Benannte Vertragsstaaten:
**DE ES FR IT**

(71) Anmelder: **ROBERT BOSCH GMBH**
**Postfach 30 02 20**
**W-7000 Stuttgart 30(DE)**

(72) Erfinder: **Richter, Gerolf, Dr.-Ing.**
**An der Innerste Au 7**
**W-3200 Hildesheim(DE)**
Erfinder: **Mejuto, Jose Luis, Ing.**
**C/Paredes de Nava, 33**
**ES-28017 Madrid(ES)**

(54) **Akkumulatorenbatterie mit im Deckel befindlichem Entgasungssystem.**

(57) Beschrieben wird eine Akkumulatoren-Batterie (10) mit flüssigem Elektrolyten, insbesondere eine Bleiakkumulatoren-Batterie für Kraftfahrzeuge, die auf der Oberseite (14) ihres Blockdeckels (13) ein allen Zellengefäßen (17) gemeinsames Labyrinth (26) besitzt. In dem Labyrinth (26) ist für jedes Zellengefäß (17) eine durch den Blockdeckel (13) führende Entgasungsöffnung (28) vorgesehen, von denen jeweils ein in der Ebene des Blockdeckels (13) liegender Kanal (29) ausgeht und der derart geführt ist, daß er infolge bestimmter Wendepunkte (32) selbst dann keinen flüssigen Elektrolyten aus den Gasauslaßöffnungen (27) austreten läßt, wenn die Akkumulatoren-Batterie (10) um bis zu 90° gekippt wird. Dieses Labyrinth (26) sorgt gemeinsam mit einem jeder Gasauslaßöffnung (27) zugeordnetem porösen, gasdurchlässigen Einsatz (41) auch für die notwendige Entgasung der Akkumulatoren-Batterie (10), wobei in den Gasen gegebenenfalls enthaltene Elektrolytpartikel zurückgehalten und in die einzelnen Zellengefäße (17) zugeführt werden.

FIG.2

Die Erfindung geht aus von einer Akkumulatoren-Batterie, insbesondere von einer Bleiakkumulatoren-Batterie für Kraftfahrzeuge, nach der Gattung des Hauptanspruchs, wie sie schon aus der US-PS 4 348 466 bekannt ist und die eine Einrichtung zur Verhütung des Auslaufens von flüssigem Elektrolyten aus der Akkumulatoren-Batterie hat. Bei einer solchen Akkumulatoren-Batterie ist auf der Oberseite ihres Blockdeckels für jedes Zellengefäß jeweils eine Kammer angeordnet, in der eine Öffnung mündet, die mit dem darunter befindlichen Zellengefäß verbunden ist und von der seitlich eine Auslaßöffnung ausgeht, welche in einen schmalen, gewundenen Kanal führt; dieser Kanal steht in Verbindung mit einem auch Kanälen anderer Zellengefäße gemeinsamem Raum, aus dem eine Gasauslaßöffnung seitlich ins Freie führt. Wird eine solche Akkumulatoren-Batterie gekippt, maximal bis auf irgendeine ihrer Seitenwände, so tritt infolge der genannten Kammern mit ihren Auslaßöffnungen und gewundenen Kanälen kein Elektrolyt aus der Akkumulatoren-Batterie heraus; wirken auf eine solche Akkumulatoren-Batterie zusätzlich jedoch Erschütterungen, dann kann in bestimmter Kipplage aus den Kammern doch Elektrolyt austreten, der dann aber bei Wiederaufrechtstellen der Akkumulatoren-Batterie auch wieder in die Zellengefäße zurückläuft, doch derart unkontrolliert, so daß die Zellengefäße in unerwünschter Weise erheblich unterschiedliche Elektrolyt-Füllstände haben.

Weiterhin ist es bekannt (GB-PS 233 528), einzellige Akkumulatoren mit flüssigem Elektrolyten dadurch auslaufsicher zu machen, daß im Bereiche ihres Deckels übereinanderliegende Kanäle angeordnet sind, die nahe der Gehäuse-Seitenwände liegende Wendepunkte haben, einem solchen Akkumulatoren jedoch eine relativ große Bauhöhe geben.

Der Erfindung liegt demgegenüber die Aufgabe zugrunde, eine Akkumulatoren-Batterie mit flüssigem Elektrolyten zu entwickeln, die in allen ihren vier Seitenlagen auslaufsicher ist und das auch bei langandauernden Erschütterungen, wobei diese Akkumulatoren-Batterie aber von üblicher Bauhöhe ist. Als weiterer Vorteil ist anzusehen, daß das der Auslaufsicherheit dieser Akkumulatoren-Batterie dienende spezielle Labyrinth ein besonders wirksames Entgasungssystem bildet, in dem infolge der relativ langen Kanäle eine gute Kondensation der in den Gasen enthaltenen Elektrolytpartikel bewirkt wird.

Diese Aufgabe wird erfindungsgemäß mittels der im Hauptanspruch aufgeführten kennzeichnenden Merkmale gelöst. Durch die in den Unteransprüchen aufgeführten Maßnahmen sind vorteilhafte Weiterbildungen und Verbesserungen der im Hauptanspruch angegebenen Akkumulatoren-Batterie möglich. Besonders vorteilhaft ist es, wenn der in der Längserstreckung der Akkumulatoren-Batterie verlaufende Sammelkanal noch zwei zusätzliche Sammelkanal-Abschnitte hat, die axial hintereinander, jedoch parallel zum Sammelkanal verlaufen, durch eine Querwand voneinander getrennt sind, jeweils über einen eigenen Durchlaß zum Sammelkanal verfügen und an ihren freien Enden jeweils eine ins Freie führende Gasauslaßöffnung haben. Infolge dessen, daß alle Kanäle des Labyrinths ein leichtes Gefälle in Richtung der Entgasungsöffnungen haben, fließt der sich im Labyrinth befindliche Elektrolyt nach dem Wiederaufrichten einer zuvor in Kipplage gewesenen Akkumulatoren-Batterie in die Entgasungsöffnungen und demzufolge in die Zellengefäße zurück.

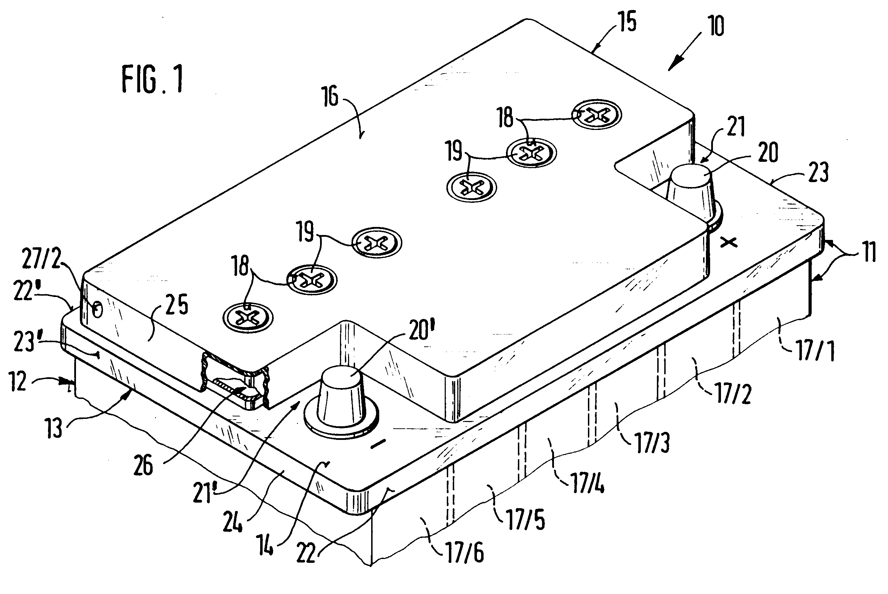

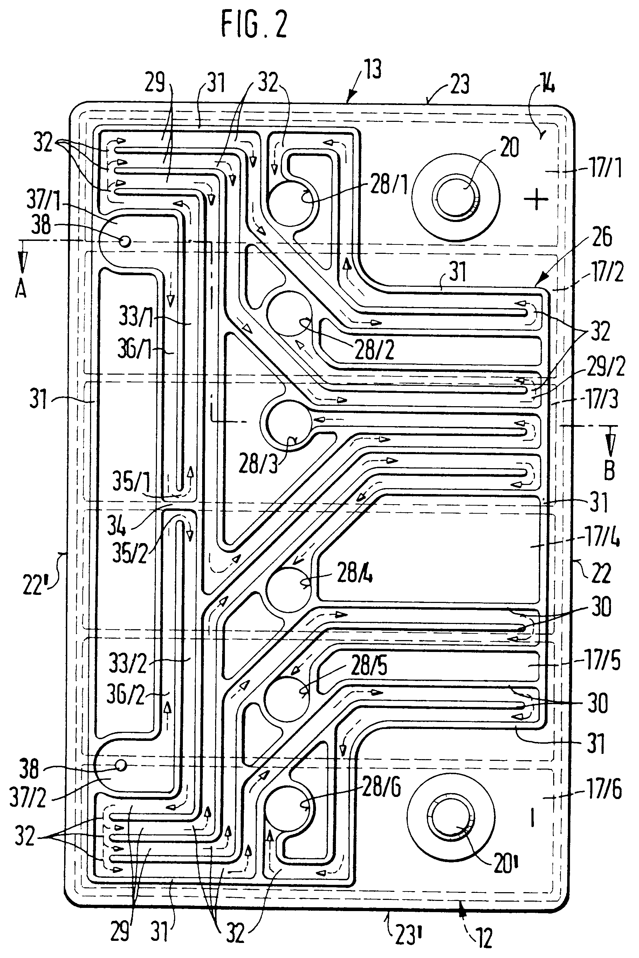

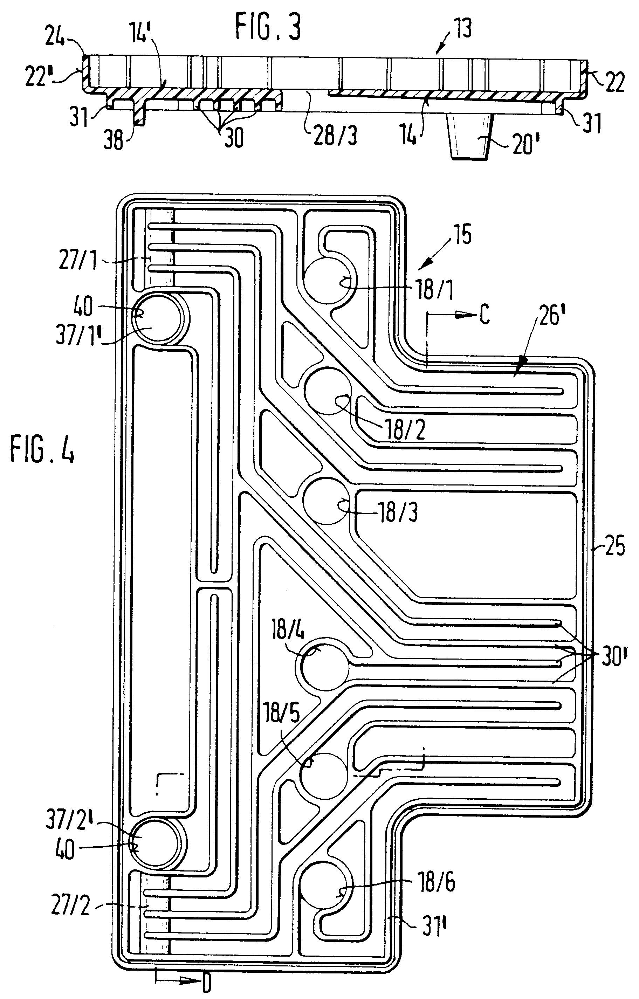

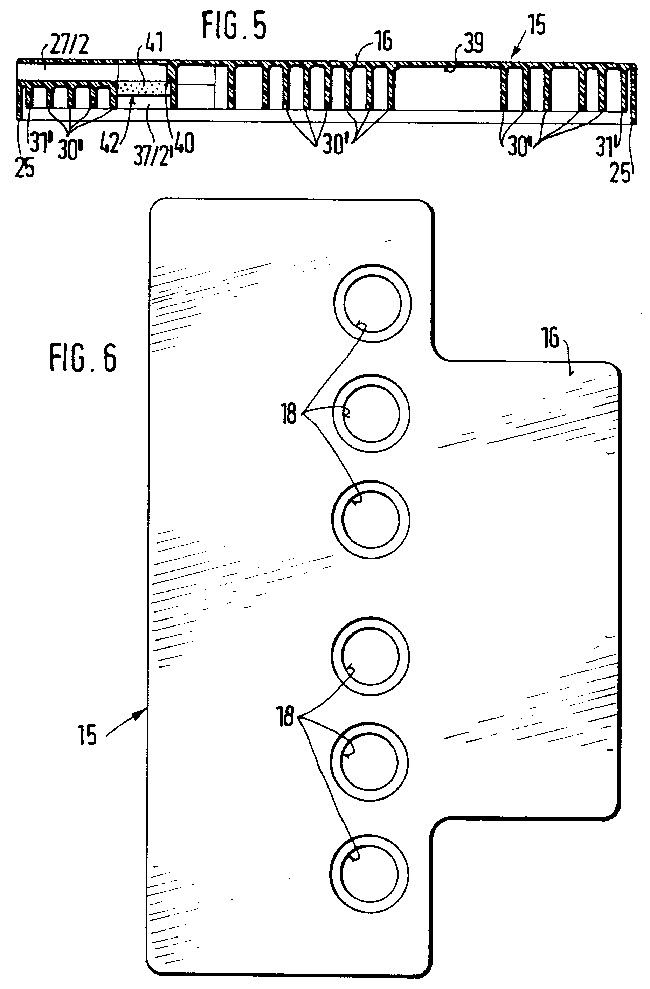

Ein Ausführungsbeispiel der Erfindung ist in der Zeichnung dargestellt und in der nachfolgenden Beschreibung näher erläutert. Es zeigen Figur 1 eine perspektivische Ansicht auf den Bereich des erfindungsgemäßen Blockdeckels einer Akkumulatoren-Batterie mit darauf festgelegtem Verschlußteil (verkleinerte Darstellung), Figur 2 die Draufsicht auf den Blockdeckel nach Figur 1, jedoch ohne Verschlußteil, Figur 3 den durch den Blockdeckel gemäß der Linie A/B in Figur 2 verlaufenden Schnitt, Figur 4 die Unteransicht des Verschlußteils nach Figur 1, jedoch ohne Stopfen und Einsätze, Figur 5 den durch das Verschlußteil gemäß der Linie C/D in Figur 4 verlaufenden Schnitt (mit eingesetztem Einsatz, aber ohne Stopfen) und Figur 6 die Draufsicht auf das Verschlußteil nach den Figuren 1, 4 und 5 (Stopfen nicht dargestellt).

In der Figur 1 der Zeichnung ist in perspektivischer Ansicht der deckelseitige Bereich einer Blei-Akkumulatoren-Batterie 10 dargestellt, die für die Verwendung in Kraftfahrzeugen vorgesehen ist. Diese Akkumulatoren-Batterie 10 hat ein im wesentlichen prismatisches Gehäuse 11, das sich aus einem Blockkasten 12 und einem Blockdeckel 13 zusammensetzt; der Blockdeckel 13 ist auf seiner Oberseite 14 mit einem Verschlußteil 15 versehen, welches fest und abdichtend mit dem Blockdeckel 13 verbunden ist. Von der Oberseite 16 des Verschlußteils 15 führt in jedes der Zellengefäße 17 dieser Akkumulatoren-Batterie 10 eine Flüssigkeitseinfüllöffnung 18, die mittels eines Stopfens 19 verschließbar ist; die Stopfen 19 können sowohl als Schraubstopfen oder auch als Druckstopfen ausgebildet sein. Das Vorhandensein derartiger Flüssigkeitseinfüllöffnungen 18 und Stopfen 19 ist jedoch keine Voraussetzung für die vorliegende Erfindung. Der Blockkasten 12 ist bei der hier beispielsweise dargestellten Akkumulatoren-Batterie 10 in sechs senkrecht und nebeneinander angeordnete Zellengefäße 17 (gestrichelt angedeutet) unterteilt, in denen in bekannter Weise (nicht dargestellte) Plattenblöcke und flüssiger Elektrolyt enthalten sind. Die genannten Plattenblöcke setzen sich dabei aus negativen und positiven Elektroden-Platten und zwischen diesen Elektrodenplatten befindlichen Separatoren zusammen. Bei heutzutage zumeist verwendeten Akkumulatoren-Batterien 10 für Kraftfahrzeuge finden Elektrodenplatten Verwendung, die im wesentlichen aus Blei bzw. Bleiverbindungen bestehen und deren Elektrolyt verdünnte Schwefelsäure ist. Die Elektrodenplatten in den Zellengefäßen 17 sind über (nicht dargestellte) Plattenverbinder parallelgeschaltet und die Plattenblöcke in den Zellengefäßen 14 sind über (nicht dargestellte) Zellenverbinder zumeist in Reihe geschaltet, wobei der Anfang dieser Reihenschaltung als positiver Anschlußpol 20 aus dem Endzellengefäß 17/1 nach oben durch den Blockdeckel 13 ragt und das Ende dieser Reihenschaltung als negativer Anschlußpol 20' aus dem Endzellengefäß 17/6 nach oben durch den Blockdeckel 13 ragt. Diese abgedichtet durch den Blockdeckel 13 geführten Anschlußpole 20, 20' sind jeweils in einem nischenartigen Bereich 21 bzw. 21' angeordnet, die sich bevorzugt an den Enden einer Längsseite 22 des Blockdeckels 13 befinden. Diese Anschlußpole 20 und 20' sind in ihrer Höhe derart bemessen, so daß sie maximal bis zur Oberseite 16 des Verschlußteiles 15 reichen; auch die Stopfen 19 sind gegebenenfalls derart ausgelegt, so daß sie bündig mit der Oberseite 16 des Verschlußteils 15 sind. Die genannten Platten- und Zellenverbinder und auch die Anschlußpole 20, 20' bestehen üblicherweise aus Bleilegierungen. Der Blockkasten 12, der Blockdeckel 13, das Verschlußteil 15 und die Stopfen 19 bestehen in bekannter Weise aus elektrolytbeständigem, thermoplastischem Kunststoff; die abdichtenden Verbindungen zwischen Blockkasten 12 und Blockdeckel 13 einerseits und auch die Verbindung zwischen Blockdeckel 13 und Verschlußteil 15 können durch Schmelzschweißen, Vibrationsschweißen, Verkleben o. ä. erfolgen. Um die in der Zeichnung nicht dargestellte Schweiß- bzw. Klebeverbindung zwischen Blockkasten 12 und Blockdeckel 13 zu kaschieren, ist der Blockdeckel 13 an seinen Längsseiten 22 und 22' und auch an seinen Schmalseiten 23 und 23' mit einem nach unten weisenden Kragen 24 versehen, der die genannte Verbindung verdeckt. Die genannte (nicht dargestellte) Schweiß- bzw. Klebeverbindung zwischen dem Blockdeckel 13 und dem Verschlußteil 15 wird ebenso mittels eines Kragens 25 verdeckt, der ringsum von der Peripherie des Verschlußteils 15 nach unten weist und bis in die Nähe der Oberseite 14 des Blockdeckels 13 reicht; dieser Kragen 25 des Verschlußteils 15 steht bei der bevorzugten Ausführungsform direkt auf der Oberseite 14 des Blockdeckels 13 auf.

In dem zwischen der Oberseite 14 des Blockdeckels 13 und dem Verschlußteil 15 gebildeten Zwischenraum befindet sich ein Labyrinth 26, das einerseits der Ableitung von in den Zellengefäßen 17 entstandenen Gasen und andererseits ein Auslaufen von Elektrolyt aus der Akkumulatoren-Batterie 10 verhindern soll, falls diese Akkumulatoren-Batterie 10 um bis zu 90° in Richtung einer beliebigen Längsseite 22, 22' bzw. Schmalseite 23, 23' gekippt wird. Die aus den Zellengefäßen 17 austretenden Gase (nicht dargestellt) enthalten häufig Elektrolyt-Partikelchen, die dann in diesem Labyrinth 26 infolge Kondensation abgeschieden und in die Zellengefäße 17 zurückgeführt werden; die Gase - weitestgehend von Elektrolyt-Partikeln befreit - können aus einer Gasauslaßöffnung 27 ins Freie treten, von denen eine (27/2) in der Figur 1 in dem zur Schmalseite 23' des Blockdeckels 13 weisenden Bereich des Kragens 25 des Verschlußteils 15 zu sehen ist.

Die Figuren 2 und 3 der Zeichnung zeigen den Blockdeckel 13 der Akkumulatoren-Batterie 10, dabei ist in der Figur 2 aus der Draufsicht des Blockdeckels 13 das Labyrinth 26 im Detail dargestellt. Jedem der in der Figur 1 angedeuteten Zellengefäße 17/1 bis 17/6 ist eine Entgasungsöffnung 28 zugeordnet, welche jeweils koaxial unterhalb der zugehörigen Flüssigkeitseinfüllöffnung 18 im Verschlußteil 15 gelegen ist; dem Endzellengefäß 17/1 ist dabei die Entgasungsöffnung 28/1 und dem Endzellengefäß 17/6 die Entgasungsöffnung 28/6 zugeordnet. Die Entgasungsöffnungen der zwischen diesen beiden Endzellengefäßen 17/1 und 17/6 liegenden Zellengefäße 17/2 bis 17/5 sind mit 28/2 bis 28/5 bezeichnet. Alle diese Entgasungsöffnungen 28/1 bis 28/6 liegen in Längserstreckung der Akkumulatoren-Batterie 10 parallel zu den Längsseiten 22, 22' und im wesentlichen mittig zur Quererstreckung der Akkumulatoren-Batterie 10. Diese Entgasungsöffnungen 28/1 bis 28/6 dienen außerdem zum Einfüllen von Flüssigkeiten in die Zellengefäße 17/1 bis 17/6, und zwar von flüssigem Elektrolyten bei der Erstfüllung und gegebenenfalls von destilliertem Wasser beim Nachfüllen, sofern von der Elektrolytflüssigkeit infolge von Ladevorgängen Wasserverlust aufgetreten ist. Diese Entgasungsöffnungen 28 haben bevorzugterweise einen kleineren Durchmesser als die Flüssigkeitseinfüllöffnungen 18 im Verschlußteil 15. Es ist von Vorteil, wenn (in nicht dargestellter Weise) die in die Zellengefäße 17/1 bis 17/6 weisenden Stopfen 19 noch in die jeweiligen Entgasungsöffnungen 28/1 bis 28/6 mit hineinragen und mit der Entgasungsöffnung 28/1 bis 28/6 gemeinsam ein Extra-Labyrinth bilden; in einfachster Weise könnte ein solches Extra-Labyrinth durch je einen Ringspalt zwischen den Entgasungsöffnungen 28/1 bis 28/6 und dem jeweiligen Stopfen 19 sein. Der Blockkasten 12 und die Lage seiner Zellengefäße 17/1 bis 17/6 ist in der Figur 2 der Zeichnung gestrichelt angedeutet.

Jede dieser genannten Entgasungsöffnungen 28 ist mit einem Kanal 29 versehen, der auf der Oberseite 14 des Blockdeckels verläuft und durch auf der Blockdeckel-Oberseite 14 angeformte, nach oben weisende Trennwände 30 bzw. von einer Begrenzungswand 31 seitlich begrenzt wird. Der Verlauf dieser Kanäle 29, die ja der Entgasung, dem Abscheiden von in den Gasen enthaltenem Elektrolyten und der Erzielung der Kippsicherheit der Akkumulatoren-Batterie 10 dienen, soll am Beispiel der Entgasungsöffnung 28/2 erläutert werden: Die Entgasungsöffnung 28/2 ist oberhalb des Zellengefäßes 17/2 angeordnet. Von dieser Entgasungsöffnung 28/2 führt ein beiderseits von Trennwänden 30 begrenzter Kanal 29/2 zunächst schräg in Richtung auf das Zellengefäß 17/3 und dann senkrecht auf die Längsseite 22 dieses Blockdeckels 13 zu. Erst nahe an einem parallel zur Längsseite 22 des Blockdeckels 13 verlaufenden Abschnitt der Begrenzungswand 31 dieses Labyrinthes 26 hat der Kanal 29/2 einen Wendepunkt 32, an dem er parallel zu dem eben beschriebenen Kanal-Abschnitt, d. h. senkrecht zur Längsseite 22 des Blockdeckels 13 zurückverläuft und dann in Richtung der Schmalseite 23 des Blockdeckels 13 bis in den Bereich des Zellengefäßes 17/1 verläuft. Der am nahesten an der Schmalseite 23 des Blockdeckels 13 liegende Punkt dieses Kanals 29/2 wendet sich dann in Richtung auf die Längsseite 22' des Blockkastens 13 und führt bis nahe an den dort parallel zur Längsseite 22' des Blockkastens 13 verlaufenden Abschnitt der Begrenzungswand 31. An dieser Stelle mündet dieser Kanal 29/2 in einem Sammelkanal 33/1, in welchem auch entsprechende Kanäle 29 aus den Zellengefäßen 17/1 und 17/3 münden. Dieser Sammelkanal 33/1 verläuft zunächst für ein kurzes Stück parallel zur Längsseite 22' des Blockkastens 13, wendet sich dann aber zurück in Richtung der Entgasungsöffnung 28/1, um dann wiederum parallel zur Längsseite 22' des Blockkastens 13 zu verlaufen. Dieser letztgenannte Bereich des Sammelkanals 33/1 führt dann bis zur Mitte der Längserstreckung des Blockdeckels 13 bzw. der Akkumulatoren-Batterie 10 und wird durch eine Querwand 34 in Richtung Längsseite 22' des Blockdeckels 13 umgelenkt. Diese Umlenkung wird durch einen Durchlaß 35/1 bewirkt, der zwischen dieser Querwand 34 und der den letzten Bereich dieses Sammelkanals 33/1 bildenden, parallel zur Längsseite 22' des Blockdeckels 13 verlaufenden Trennwand gebildet ist. Dieser Durchlaß 35/1 ist ein erneuter Wendepunkt in diesem Kanal 29/2, denn hier beginnt ein zusätzlicher Sammelkanal-Abschnitt 36/1, welcher wieder in Richtung auf die Schmalseite 23 des Blockdeckels 13 verläuft. Dieser zusätzliche Sammelkanal-Abschnitt 36/1 führt dann bis etwa an das Zellengefäß 17/1 und endet in einer kammerartigen Kanalerweiterung 37/1. Diese kammerartige Kanal-Erweiterung 37/1 weist in Richtung auf die Längsseite 22' des Blockdeckels 13 und endet an dem diesseitigen Abschnitt der Begrenzungswand 31. In der Mitte dieser kammerartigen Kanal-Erweiterung 37/1 ragt ein Stützzapfen 38 nach oben (siehe auch Figur 3). Dieser Kanal 29/2 und auch der Sammelkanal 33/1 sowie der zusätzliche Sammelkanal-Abschnitt 36/1 sind mit leichtem Gefälle (z. B. 1 : 300) in Richtung auf die zugehörige Entgasungsöffnung 28/2 ausgebildet; die Gefällerichtung ist in der Figur 2 durch in den Kanälen 29 eingezeichnete kleine Pfeile angedeutet.

Der Verlauf der anderen Kanäle 29 ist im Prinzip vergleichbar mit der Kanal-Führung dieses Kanales 29/2, und zwar ist jeder Kanal 29 derart angeordnet, daß er - ausgehend von der jeweiligen Entgasungsöffnung 28 - an seiner jeweils naheliegendsten Blockdeckel-Schmalseite 23 bzw. 23' und auch an jeder der beiden Blockdeckel-Längsseiten 22 bzw. 22' einen Wendepunkt 32 hat und dann in dem genannten Sammelkanal 33/1 und dem sich anschließenden Sammelkanal-Abschnitt 36/1 oder - im Falle der Entgasungsöffnungen 28/4 bis 28/6 - zum entsprechenden Sammelkanal 33/2 und dem zusätzlichen Sammelkanal-Abschnitt 36/2 führt, der auch eine kammerartige Kanal-Erweiterung 37/2 hat. Die einzelnen Abschnitte aller Kanäle 29 sind derart angeordnet, so daß sie zumeist parallel oder quer zur Längserstreckung der Akkumulatoren-Batterie 10 verlaufen; in Hinsicht auf die an den Blockdeckel-Schmalseiten 23 bzw. 23' befindlichen Wendepunkte 32 liegt der entsprechende Wendepunkt 32 für die Entgasungsöffnungen 28/1 und 28/6 am nahesten an der jeweiligen Blockdeckel-Schmalseite 23 bzw. 23'. Wie sich aus der Beschreibung des Verlaufs zum Kanal 29/2 ergibt, haben die an den Blockdeckel-Schmalseiten 23 bzw. 23' liegenden Wendepunkte 32 eine Umlenkung von 90° und der jeweils abgelenkte Kanal-Abschnitt verläuft parallel zu dem Abschnitt der entsprechenden Schmalseiten-Begrenzungswand 31. Die an den Blockdeckel-Längsseiten 22 bzw. 22' liegenden Wendepunkte 32 haben hingegen eine Umlenkung von etwa 180° bzw. von zweimal etwa 90°. Bei Akkumulatoren-Batterien, die dem Risiko des Kippens weniger ausgesetzt sind, kann auf die Querwand 34 im Bereich des Sammelkanals 33, 36 verzichtet werden und es ist dann auch nur ein einziger Durchlaß 35 erforderlich.

Die vorstehend beschriebenen Trennwände 30 und die das gesamte Labyrinth 26 umfassende Begrenzungswand 31 sind auf der Oberseite 14 des Blockdeckels 13 mit angeformt und bilden das nach oben offene Labyrinth 26. Die Unterseite des Blockdeckels 13, die mit dem Blockkasten 12 abdichtend verbunden wird, ist mit dem Bezugszeichen 14' versehen.

In den Figuren 4 bis 6 der Zeichnung ist das Verschlußteil 15 dargestellt, welches das vorstehend beschriebene Labyrinth 26 auf der Blockdeckel-Oberseite 14 verschließt. An der Unterseite 39 (siehe Figur 5) dieses Verschlußteils 15 ist ebenfalls ein Labyrinth 26' mit angeformt, das deckungsgleich mit dem Labyrinth 26 auf dem Blockdeckel 13 ist. Die Trennwände 30' und die Begrenzungswand 31' dieses Verschlußteils 15 ist mit den entsprechenden Trennwänden 30 bzw. der Begrenzungswand 31 des Blockdeckels 13 durch Schweißen (z. B. Schmelzschweißen, Vibrationsschweißen) oder Verkleben miteinander verbunden; das derart gebildete Labyrinth 26/26' ist somit oben verschlossen. Der vorstehend genannte Verbindungsbereich ist - wie schon weiter vorn erwähnt - mittels des rings um die Peripherie des Blockdeckels 13 verlaufenden Kragens 25 verdeckt.

Oberhalb der beiden kammerartigen Kanalerweiterungen 37/1 bzw. 37/2 ist auch im Verschlußteil 15 je eine kammerartige Erweiterung 37/1' bzw. 37/2' eingeformt, von denen aus jeweils eine ins Freie führende Gasauslaßöffnung 27/1 bzw. 27/2 ausgeht; beim vorliegenden Ausführungsbeispiel sind die Gasauslaßöffnungen 27/1 und 27/2 rohrförmig zu denjenigen beiden Bereichen des Kragens 25 geführt, die parallel zu den Blockdeckel-Schmalseiten 23 bzw. 23' verlaufen. Anstelle dieser Führung der Gasauslaßöffnungen 27/1 und 27/2 können sie aber auch durch die Oberseite 16 der Verschlußteil 15 bzw. auch in Richtung auf diejenigen Bereiche der Begrenzungswand 31' ausgerichtet sein, die parallel zu den Blockdeckel-Längsseiten 22 bzw. 22' verlaufen.

In den beiden kammerartigen Kanalerweiterungen 37/1' und 37/2' im Verschlußteil 15 ist jeweils ein zur Blockdeckel-Oberseite 16 weisender Aufnahmesitz 40 für je einen Einsatz 41 eingeformt, der porös, gasdurchlässig und möglichst abweisend gegenüber Flüssigkeiten ist; diese Einsätze 41 bilden jeweils eine Barriere zwischen der entsprechenden kammerartigen Kanalerweiterung 37/1' und der sich anschließenden Gasauslaßöffnung 27/1 bzw. zwischen der kammerartigen Kanalerweiterung 37/2' und der sich daran anschließenden Gasauslaßöffnung 27/2. Die Einsätze 41, die vorzugsweise aus einem thermoplastischen Kunststoff bestehen, sind in ihrer jeweiligen kammerartigen Kanalerweiterung 37/1' bzw. 37/2' durch Kleben oder Schweißen festgelegt, können aber auch zusätzlich oder allein mit Stützzapfen 38 gehalten sein, die auf der Oberseite 14 des Blockdeckels 13 (siehe Fig. 2 und 3) mit angeformt sind. Diese Einsätze 41 verhindern, daß sich außerhalb der Akkumulatoren-Batterie 10 befindende heiße Quellen in der Akkumulatoren-Batterie 10 befindliche Gase entzünden, und sie dienen ferner dazu, daß gegebenenfalls bis hierher gelangte, aus den Zellengefäßen 17 ausgetretene Gase noch Elektrolyt mit ins Freie tragen. Die aus den Zellengefäßen 17 kommenden und durch das Labyrinth 26/26' geführten Gase treffen bei den Einsätzen 41 auf deren Unterseite 42, was zur Folge hat, daß hier gegebenenfalls noch zurückgehaltene Elektrolytflüssigkeit in die jeweilige kammerartige Kanalerweiterung 37/1 bzw. 37/2 auf der Blockdeckel-Oberseite 14 zurücktropft und dann infolge des in dem Labyrinth 26 befindlichen Gefälles in die Zellengefäße 17 zurückläuft.

Im vorstehend beschriebenen Ausführungsbeispiel wird das Labyrinth 26/26' durch Trennwände 30 und die Begrenzungswand 31 auf der Blockdeckel-Oberseite 14 und durch Trennwände 30' und die Begrenzungswand 31' auf der Unterseite 39 des Verschlußteils 15 gebildet, alternativ kann aber auch die Gesamthöhe des Labyrinthes 26/26' durch Trennwände und durch eine Begrenzungswand gebildet werden, die entweder in voller Höhe auf der Blockdeckel-Oberseite 14 oder auf der Verschlußteil-Unterseite 39 angeformt sind. Wird eine vorstehend beschriebene Akkumulatoren-Batterie 10 bis maximal um 90°, d. h. also bis auf eine ihrer Längsseiten 22, 22' bzw. eine ihrer Schmalseiten 23, 23' gekippt, dann kann infolge des beschriebenen Labyrinthes 26/26' mit den erfindungsgemäß angeordneten Wendepunkten 32 kein flüssiger Elektrolyt aus der Akkumulatoren-Batterie 10 durch die Gasauslaßöffnungen 27/1 bzw. 27/2 austreten; aufgrund dieser Wendepunkte 32 bilden die einzelnen Abschnitte jedes Kanales 29 ein kommunizierendes System, an dessen an der Blockdeckel-Längsseite 22' befindlichem jeweiligen Wendepunkt 32 kein flüssiger Elektrolyt mehr ankommt. Der sich den jeweiligen Kanälen 29 anschließende Sammelkanal 33/1 bzw. 33/2 bildet über den jeweils zugehörigen Durchlaß 35/1 bzw. 35/2 mit dem zusätzlichen Sammelkanalabschnitt 36/1 bzw. 36/2 noch einen Sicherheitsbereich gegen das Austreten von flüssigem Elektrolyten aus der Akkumulatoren-Batterie 10. Ein zweiter Sicherheitsbereich gegen den Austritt von flüssigem Elektrolyten wird durch die Einsätze 41 gebildet, die für Gase durchlässig, für Flüssigkeiten bevorzugterweise jedoch undurchlässig sind.

Mittels der zwischen den beiden Sammelkanälen 33/1 und 33/2 befindlichen Querwand 34 wird bewirkt, daß in dem Fall, daß infolge außergewöhnlicher Umstände (starke Erschütterungen, schwungartige Kippbewegung) ausnahmsweise doch flüssiger Elektrolyt in einen der Sammelkanäle 33/1 bzw. 33/2 gelangt sein sollte, dennoch kein Elektrolyt bis in den Bereich der in der anderen Batteriehälfte befindlichen Entgasungsöffnungen 28/1, 28/2, 28/3 bzw. 28/4, 28/5, 28/6 fließt und beim Wiederaufrichten der Akkumulatoren-Batterie 10 in ihre normale Lage Zellengefäße 17 (insbesondere Zellengefäße 17/1 und 17/6) überfüllt.

Die Akkumulatoren-Batterie 10 gemäß dieser Erfindung besitzt ein Entgasungssystem und eine Sicherung gegen den Austritt von flüssigem Elektrolyten bei Kipplagen dieser Akkumulatoren-Batterie 10 bis zu 90°, das allen praktischen Anforderungen gerecht wird; diese Akkumulatoren-Batterie 10 hält trotz dieser Vorkehrungen die durch Normen festgelegten Außenabmaße ein.

## Patentansprüche

1. Akkumulatoren-Batterie (10) mit flüssigem Elektrolyten, insbesondere Bleiakkumulatoren-Batterie für Kraftfahrzeuge, mit einem im wesentlichen prismatischen Gehäuse (11), das sich aus einem alle Zellengefäße (17) bildenden Blockkasten (12) und einem die Zellengefäße (17) abdeckenden Blockdeckel (13) zusammensetzt, der mit seiner Unterseite (14') am Blockkasten (12) derart befestigt ist, so daß die Zellengefäße (17) untereinander und das Gehäuse (11) nach außen hin abgedichtet sind, der (Blockdeckel 13) außerdem je Zellengefäß (17) eine im wesentlichen mittig zur Quererstreckung der Akkumulatoren-Batterie (10) angeordnete, auch dem Flüssigkeitseinfüllvorgang mit dienende Entgasungsöffnung (28) aufweist, der (Blockdeckel 13) ferner auf seiner Oberseite (14) - bevorzugt nahe einer Längsseite (22, 22') - Bereiche (21, 21') für den abgedichteten Durchtritt von Anschlußpolen (20, 20') hat und der (Blockdeckel 13) weiterhin auf seiner Oberseite (14) mit einem mehrkanaligen, mittels seitlichen Trennwänden (30, 30') und einer Begrenzungswand (31, 31') gebildeten Labyrinth (26, 26') versehen ist, das in einer Ebene mit dem Blockdeckel (13) liegt, der Entgasung der Zellengefäße (17) und dem Zurückhalten bzw. Zurückfließen von in Gasen enthaltenem Elektrolyten dient, mindestens eine ins Freie führende Gasauslaßöffnung (27) besitzt und mittels eines Verschlußteils (15) nach oben hin verschlossen ist, das an dem Blockdeckel (13) abdichtend befestigt ist, dadurch gekennzeichnet, daß im Labyrinth (26, 26') jeder Entgasungsöffnung (28) ein schmaler Kanal (29) zugeordnet ist, der von der jeweiligen Entgasungsöffnung (28) ausgeht, an seiner jeweils naheliegendsten Blockdeckel-Schmalseite (23, 23') und auch an jeder der beiden Blockdeckel-Längsseiten (22, 22') einen Wendepunkt (32) hat und in einem den Kanälen (29) mehrerer Zellengefäße (17) gemeinsamen Sammelkanal (33) mündet, der zu der mindestens einen ins Freie führenden Gasauslaßöffnung (27) führt.

2. Akkumulatoren-Batterie nach Anspruch 1, dadurch gekennzeichnet, daß der jeweils an der Blockdeckel-Schmalseite (23, 23') liegende Kanal-Wendepunkt (32) des zugehörigen Endzellengefäßes (17/1, 17/6) im Vergleich zu den entsprechenden Kanal-Wendepunkten (32) der anderen Zellengefäße (17/2 bis 17/5) am nahesten an der jeweiligen Blockdeckel-Schmalseite (23, 23') liegt.

3. Akkumulatoren-Batterie nach einem der Ansprüche 1 oder 2, dadurch gekennzeichnet, daß die an den Blockdeckel-Schmalseiten (23, 23') liegenden Wendepunkte (32) der jeweiligen Labyrinth-Kanäle (29) eine Umlenkung von 90° haben und daß der jeweils abgelenkte Kanal-Abschnitt parallel zu dem entsprechenden Abschnitt der Schmalseiten-Begrenzungswand (31, 31') des Labyrinthes (26/26') verläuft.

4. Akkumulatoren-Batterie nach einem der Ansprüche 1 bis 3, dadurch gekennzeichnet, daß die an den Blockdeckel-Längsseiten (22, 22') liegenden Wendepunkte (32) der Labyrinth-Kanäle (29) eine Umlenkung von etwa 180° bzw. von etwa zweimal 90° haben.

5. Akkumulatoren-Batterie nach einem der Ansprüche 1 bis 4, dadurch gekennzeichnet, daß der Sammelkanal (33/1, 33/2) des Labyrinths (26/26') in Längserstreckung der Akkumulatoren-Batterie (10) verläuft und etwa in der Mitte der Längserstreckung einen Durchlaß (35) in einen zusätzlichen, auch in Längserstreckung der Akkumulatoren-Batterie (10) verlaufenden Sammelkanal-Abschnitt (36/1, 36/2) aufweist, an dessen beiden freien Enden sich je eine ins Freie führende Gasauslaßöffnung (27/1, 27/2) befindet.

6. Akkumulatoren-Batterie nach einem der Ansprüche 1 bis 4, dadurch gekennzeichnet, daß der Sammelkanal (33/1, 33/2) des Labyrinthes (26/26') etwa in der Mitte der Längserstreckung der Akkumulatoren-Batterie (10) eine Querwand (34) hat, neben der beiderseits je ein Durchlaß (35/1, 35/2) in einen zusätzlichen, auch in Längserstreckung der Akkumulatoren-Batterie (10) verlaufenden Sammelkanal-Abschnitt (36/1, 36/2) führt, der gegenüber dem jeweils anderen zusätzlichen Sammelkanal-Abschnitt (36/2, 36/1) mittels der Querwand (34) getrennt ist, und daß sich an den freien Enden beider zusätzlicher Sammelkanal-Abschnitte (36/1, 36/2) je eine ins Freie führende Gasauslaßöffnung (27/1, 27/2) befindet.

7. Akkumulatoren-Batterie nach einem der Ansprüche 1 bis 6, dadurch gekennzeichnet, daß sich - in Gasströmungsrichtung gesehen - im Bereich jeder Gasauslaßöffnung (27/1, 27/2) des Labyrinths (26/26') ein poröser, gasdurchlässiger, möglichst Flüssigkeiten abweisender Einsatz (41) befindet.

8. Akkumulatoren-Batterie nach Anspruch 7, dadurch gekennzeichnet, daß jeder einer Gasauslaßöffnung (27/1, 27/2) zugeordnete Einsatz (41) dem Sammelkanal (33/1, 33/2) bzw. dem zusätzlichen Sammelkanal-Abschnitt (36/1, 36/2) mit seiner Unterseite (42) zugewendet ist.

9. Akkumulatoren-Batterie nach einem der Ansprüche 1 bis 8, dadurch gekennzeichnet, daß jede ins Freie führende Gasauslaßöffnung (27/1, 27/2) an einer Blockdeckel-Schmalseite (23, 23') angeordnet ist.

10. Akkumulatoren-Batterie nach einem der Ansprüche 1 bis 9, dadurch gekennzeichnet, daß die Trennwände (30) und die Begrenzungswand (31) des Labyrinthes (26/26') in ihrer Höhe entweder vollständig auf der Oberseite (14) des Blockdeckels (13) oder vollständig an der Unterseite (39) des Verschlußteils (15) oder auch teilweise auf der Oberseite (14) des Blockdeckels (13) und teilweise an der Unterseite (39) des Verschlußteils (15) mit angeformt sind.

11. Akkumulatoren-Batterie nach einem der Ansprüche 1 bis 10, dadurch gekennzeichnet, daß die Kanäle (29) des Labyrinthes (26/26') Gefälle in Richtung der Entgasungsöffnungen (28) haben.

12. Akkumulatoren-Batterie nach einem der Ansprüche 1 bis 11, dadurch gekennzeichnet, daß in dem Verschlußteil (15) für jedes Zellengefäß (17) der Akkumulatoren-Batterie (10) eine Flüssigkeitseinfüllöffnung (18) mit eingeformt ist, die jeweils oberhalb einer Entgasungsöffnung (28) angeordnet und mittels eines Stopfens (19) verschließbar ist.

FIG.1

EP 0 503 264 A1

# FIG. 2

FIG. 3

FIG. 4

## FIG.5

## FIG.6

Europäisches
Patentamt

**EUROPÄISCHER RECHERCHENBERICHT**

Nummer der Anmeldung

EP   92 10 1769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN<br>vol. 9, no. 219 (M-410)(1942) 6. September 1985<br>& JP-A-60 081 762 ( MATSUSHITA DENKI SANGYO K.K.<br>) 9. Mai 1985<br>* Zusammenfassung *<br>--- | 1,4,9 | H01M2/12<br>H01M2/04 |
| A | WO-A-8 604 186 (SONNAK BATTERIES)<br>* Seite 8, Zeile 6 - Zeile 9 *<br>* Seite 6, Absatz 2 *<br>* Seite 10, Absatz 3 *<br>* Seite 10, letzter Absatz - Seite 11, Absatz 1;<br>Abbildungen 1,11 *<br>--- | 1 | |
| A | EP-A-0 274 612 (ROBERT BOSCH GMBH)<br>* Spalte 3, Zeile 19 - Zeile 25; Abbildungen 1,2<br>*<br>--- | 1,7,10 | |
| A | EP-A-0 132 949 (GLOBE-UNION)<br>* Seite 10, Zeile 32 - Seite 11, Zeile 18;<br>Abbildung 2 *<br>--- | 1 | |
| A | US-A-4 778 735 (M. J. SHESTOCK ET ALL)<br>* Spalte 5, Zeile 29 - Zeile 48; Abbildungen 5-8<br>*<br>--- | 1 | **RECHERCHIERTE SACHGEBIETE (Int. Cl.5)**<br><br>H01M |
| A | FR-A-2 472 274 (COMPAGNIE FRANCAISE<br>D'ELECTRO-CHIMIE)<br>* Seite 12, Zeile 1 - Zeile 34; Abbildungen 7,8<br>*<br><br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 11 JUNI 1992 | D'HONDT J.W. |